# EUROPEAN PATENT SPECIFICATION

(11) **EP 4 344 924 B1**
(45) Date of publication and mention of the grant of the patent: **16.09.2026**
(21) Application number: 23186214.5
(22) Date of filing: 18.07.2023
(51) Int. Cl.: B60L 1/00, B60L 53/16, B60L 53/10, B60L 55/00, B60L 3/00

(54) **VEHICLE**
FAHRZEUG
VÉHICULE

(30) Priority: 27.09.2022 JP 2022154011
(43) Date of publication of application: 03.04.2024
(73) Proprietor: TOYOTA JIDOSHA KABUSHIKI KAISHA, Toyota-shi, Aichi-ken, 471 8571 (JP)
(72) Inventor: SHIRAISHI, Ryo, TOYOTA-SHI, AICHI-KEN, 471-8571 (JP); MUNEMOTO, Kentaro, TOYOTA-SHI, AICHI-KEN, 471-8571 (JP)
(74) Representative: Cabinet Beau de Loménie

(56) References cited:
- EP-B1- 2 637 280
- EP-B1- 3 036 128
- CN-A- 107 867 195
- JP-A- 2019 213 407
- US-A1- 2021 146 776

## Description

### BACKGROUND OF THE INVENTION

### 1. Field of the Invention

The technology disclosed in the present specification relates to a vehicle.

### 2. Description of Related Art

There is known a technology in which a battery of a vehicle is charged using an external electricity source while a charge connector is connected to a charge inlet of the vehicle. Further, there is known a vehicle including an electricity supply unit that can supply electric power from a battery to an external load. A related technology is disclosed in Japanese Unexamined Patent Application Publication No. 2015-100185.
EP 3036128 B1 deals with a charging system, a vehicle and a charging facility,
EP 2637280 B1 deals with a power supply system for vehicle and a vehicle equipped with said power supply system,
CN 107867195 A deals with a vehicle charging interface unit, a system for charging vehicle and a vehicle,
US 2021/146776 A1 deals with an electric automotive vehicle, and JP 2019213407 A deals with a vehicle provided with a charging and feeding device

### SUMMARY OF THE INVENTION

Due to the supply of electric power from the battery to the external load through the electricity supply unit, voltage fluctuation sometimes occurs in a terminal of the charge inlet. Further, when the charge connector is connected to the charge inlet and the charge is started, whether any of various abnormities (e.g.: CCID relay welding) has occurred in a charge cable is sometimes diagnosed. On that occasion, when the charge connector is connected to the charge inlet and the diagnosis is executed while electric power is being supplied from the electricity supply unit, a wrong diagnosis indicating that an abnormity has occurred in the charge cable is sometimes made because of the voltage fluctuation in the terminal of the charge inlet. As a result, there is fear that the charge is prohibited.

A vehicle disclosed in the present specification includes: a battery; an electricity supply unit configured to be capable of supplying electric power from the battery to an external load; a charge port unit including a charge inlet that a charge connector is attached to and detached from, the charge connector being used for charging the battery with an external electricity source; and a control unit configured to control operation of a movable portion that is included in the charge port unit. When an external electricity supply process of supplying electric power from the electricity supply unit to the external load is executed, the control unit controls the movable portion of the charge port unit, to physically prohibit the charge connector from being connected to the charge inlet.

With the above configuration, it is possible to achieve a state where the charge connector cannot be connected to the charge inlet, when the external electricity supply process is executed. Thereby, it is possible to prevent the diagnosis about the abnormity of the charge cable from being executed during the external electricity supply process. It is possible to avoid a situation where the wrong diagnosis indicating that the abnormity has occurred is made due to the external electricity supply process.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a schematic diagram of the whole configuration of a charge system 1;
FIG. 2 is a diagram for describing the configuration of a charge port unit 11;
FIG. 3 is a diagram for describing the configuration of the charge port unit 11;
FIG. 4 is a flowchart for describing the operation of a vehicle 10 in a first embodiment; and
FIG. 5 is a flowchart for describing the operation of the vehicle 10 in a second embodiment.

### DETAILED DESCRIPTION OF EMBODIMENTS

A vehicle according to the invention is defined in claim 1. In the vehicle as defined in claim 1, the movable portion of the charge port unit includes a lid body configured to be capable of moving between a closed position and an open position, the closed position being a position where the charge inlet is covered, the open position being a position where the charge inlet is exposed. The movable portion of the charge port unit further includes a lock device configured to fix the lid body at the closed position. When the external electricity supply process is started in a state where the lid body is at the closed position, the control unit activates the lock device, to fix the lid body at the closed position, and prohibits the lock device from being deactivated while the external electricity supply process is continued. With this configuration, during the external electricity supply process, it is possible to maintain the state where the charge inlet is covered with the lid body. During the external electricity supply process, it is possible to achieve a state where the charge connector cannot be connected to the charge inlet.

In the vehicle as defined in claim 1, the charge port unit further includes a first actuator configured to cause the lid body to move between the closed position and the open position. When the external electricity supply process is started in a state where the lid body is at the open position, the control unit activates the first actuator, to cause the lid body to move to the closed position. With this configuration, it is possible to cause the lid body to be automatically closed, in the case where the lid body is at the open position when the external electricity supply process is started. During the external electricity supply process, it is possible to surely make the state where the charge connector cannot be connected to the charge inlet.

The movable portion of the charge port unit includes an engagement member configured to be capable of moving between an engagement position and a disengagement position, the engagement position being a position where the engagement member engages with the charge connector, the disengagement position being a position where the engagement member disengages from the charge connector. The movable portion of the charge port unit includes a second actuator configured to cause the engagement member to move between the engagement position and the disengagement position. When the external electricity supply process is started and the charge connector is not connected to the charge inlet, the control unit activates the second actuator, to cause the engagement member to move to the engagement position. With this configuration, it is possible to cause the engagement member to automatically move to the engagement position, in the case where the charge connector is not connected when the external electricity supply process is started. With the engagement member positioned at the engagement position, it is possible to block the connection of the charge connector to the charge inlet. Thereby, during the external electricity supply process, it is possible to make the state where the charge connector cannot be connected to the charge inlet.

### First Embodiment

### Configuration of Charge System 1

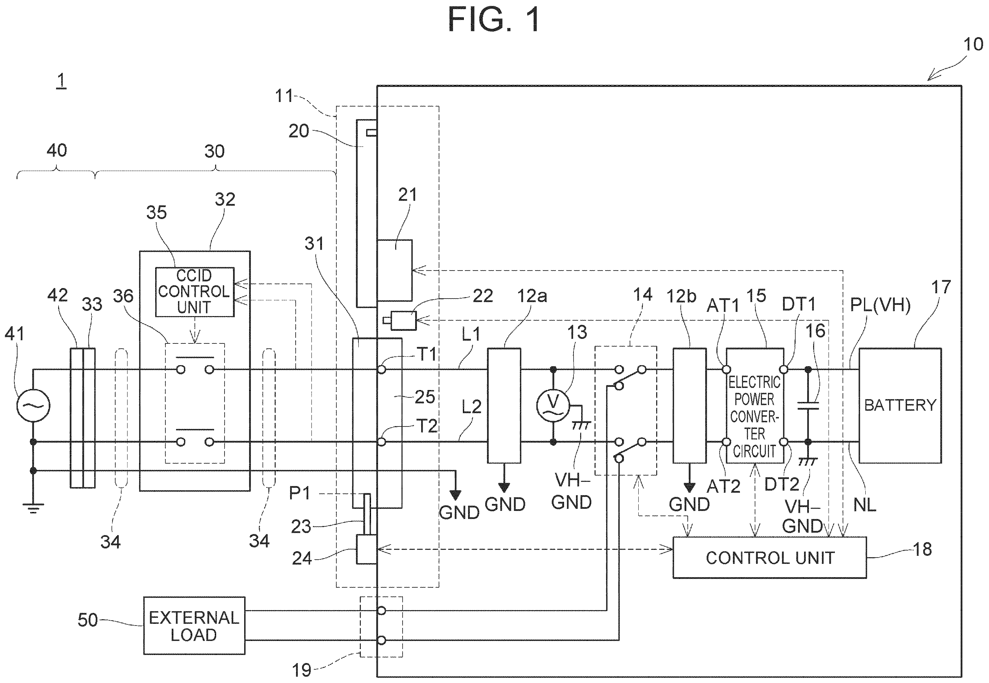

FIG. 1 shows a schematic diagram of the whole configuration of a charge system 1. The charge system 1 includes a vehicle 10, a charge cable 30, and an external electricity source 40. The configuration of the vehicle 10 is not particularly limited, as long as the vehicle 10 can travel using the electric power from a battery 17. Examples of the vehicle 10 include a hybrid electric vehicle, a battery electric vehicle, and a fuel cell electric vehicle. The vehicle 10 includes a charge port unit 11, a filter circuit 12, a voltmeter 13, a relay 14, an electric power converter circuit 15, a capacitor 16, a battery 17, a control unit 18, and an electricity supply unit 19.

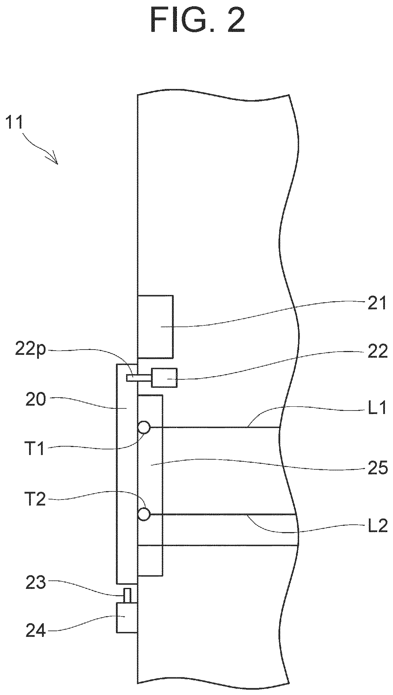

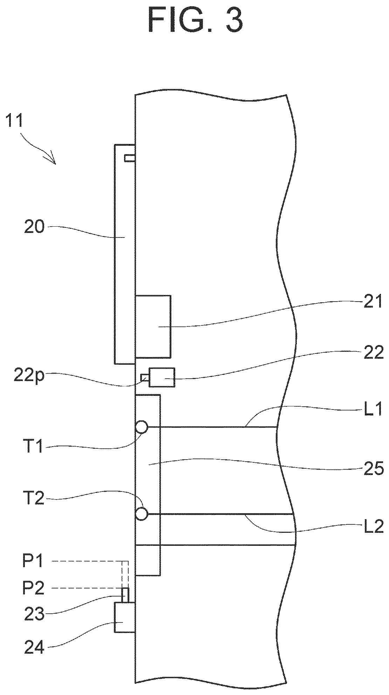

The configuration of the charge port unit 11 will be described with use of FIG. 2 and FIG. 3. FIG. 2 and FIG. 3 are enlarged schematic diagrams of the charge port unit 11. FIG. 2 shows a state where a lid body 20 is at the closed position where the charge inlet 25 is covered. FIG. 3 shows a state where the lid body 20 is at the open position where the charge inlet 25 is exposed.

The charge port unit 11 includes the lid body 20, a first motor 21, a lock device 22, an engagement member 23, a second motor 24, and a charge inlet 25. The first motor 21 is an actuator that causes the lid body 20 to move between the closed position and the open position. The lock device 22 includes a lock pin 22p. As shown in FIG. 2, it is possible to fix the lid body 20 at the closed position, by causing the lock pin 22p to engage with the lid body 20.

The engagement member 23 is configured to be capable of moving between an engagement position P1 (the dotted line in FIG. 3) and the disengagement position P2 (the solid line in FIG. 3). The second motor 24 is an actuator that causes the engagement member 23 between the engagement position P1 and the disengagement position P2. In the case where the charge connector 31 is connected to the charge inlet 25, the engagement member 23 is caused to move to the engagement position P1, and thereby the engagement member 23 can engage with the charge connector 31 (see FIG. 1). Thereby, it is possible to lock the connection between the charge connector 31 and the charge inlet 25. Further, by positioning the engagement member 23 at the disengagement position P2, the engagement member 23 can disengage from the charge connector.

The charge inlet 25 is a site that the charge connector 31 for the charge of the battery 17 by the external electricity source 40 is attached to and detached from. The charge inlet 25 includes a first terminal T1 and a second terminal T2. As shown in FIG. 1, the first terminal T1 and a first alternating-current terminal AT1 of the electric power converter circuit 15 are connected by a first electric power lint L1. The second terminal T2 and a second alternating-current terminal AT2 of the electric power converter circuit 15 are connected by a second electric power line L2.

A filter circuit 12a, the voltmeter 13, the relay 14, and a filter circuit 12b are disposed on a connection path between the charge inlet 25 and the electric power converter circuit 15. The filter circuits 12a, 12b are circuits that remove the noise included in the electric power converter circuit 15 and the like and that prevent the noise leakage to the vehicle exterior. The filter circuits 12a, 12b are connected to a reference voltage site GND. For the filter circuits 12a, 12b, various circuit configurations can be employed, and therefore detailed descriptions are omitted.

The voltmeter 13 is a site that detects alternating-current voltage. The voltmeter 13 is connected to a high-level reference voltage site VH-GND. That is, the second terminal T2 of the charge inlet 25 is connected to the high-level reference voltage site VH-GND through the voltmeter 13. The relay 14 is a C-contact relay. By the relay 14, the connection destination of the electric power converter circuit 15 can be alternatively selected between the charge inlet 25 and the electricity supply unit 19.

The electric power converter circuit 15 is an electric power converter circuit that can convert electric power between alternating-current electric power that is applied between the first alternating-current terminal AT1 and the second alternating-current terminal AT2 and direct-current electric power that is applied between a first direct-current terminal DT1 and a second direct-current terminal DT2. For example, the electric power converter circuit 15 may be a known power factor correction (PFC) circuit. For circuits of the electric power converter circuit 15, known configurations can be used, and therefore detailed descriptions are omitted.

The first direct-current terminal DT1 is connected to the battery 17 through a positive line PL. The second direct-current terminal DT2 is connected to the battery 17 through a negative line NL. The battery 17 is a rechargeable direct-current electricity source. For example, the battery 17 is configured to include a secondary battery such as a lithium-ion battery or a nickel hydride battery. The negative line NL is connected to the high-level reference voltage site VH-GND. A high voltage VH is output to the positive line PL. For example, the high voltage VH may be about 400 V. Further, various unillustrated circuits (e.g.: DC-DC converter) may be disposed on a connection path between the electric power converter circuit 15 and the battery 17. The capacitor 16 is connected between the first direct-current terminal DT1 and the second direct-current terminal DT2. The capacitor 16 has a function to smooth voltage fluctuation between the positive line PL and the negative line NL.

The electricity supply unit 19 is a site to which various external loads 50 can be connected. For the electricity supply unit 19, for example, a single-phase 100-V outlet can be used. The electricity supply unit 19 is configured to be capable of supplying electric power from the battery 17 to the external load 50. Specifically, the direct-current electric power of the battery 17 is converted into single-phase alternating-current electric power for home use, by the electric power converter circuit 15, and the single-phase alternating-current electric power is output from the electricity supply unit 19.

The control unit 18 controls the whole vehicle by receiving detection signals from unillustrated sensors and outputting control signals to apparatuses included in the vehicle 10. Further, the control unit 18 controls the operation of a movable portion (the lid body 20, the first motor 21, the lock device 22, the engagement member 23, and the second motor 24) included in the charge port unit 11. In FIG. 1, various signal paths are shown by dotted-line arrows.

The charge cable 30 includes a charge connector 31, a charging circuit interrupt device (CCID) 32, a plug 33, and an electric wire portion 34. The plug 33 is connected to an electricity source outlet 42 of the external electricity source 40. The charge connector 31 is connected to the charge inlet 25 of the vehicle 10. The electric wire portion 34 is an electric power line for transmitting electric power from the external electricity source 40 to the vehicle 10.

The CCID 32 includes a CCID control unit 35 and a CCID relay 36. The CCID control unit 35 is a site for performing various charge controls. The CCID control unit 35 performs an opening-closing control for the CCID relay 36. Further, the CCID control unit 35 detects the voltages of the first terminal T1 and second terminal T2 of the charge inlet 25. The CCID relay 36 is provided on the electric wire portion 34, and is controlled by the CCID control unit 35. When the CCID relay 36 is opened, the electric power path in the charge cable 30 is cut off. On the other hand, when the CCID relay 36 is closed, the supply of the electric power from the external electricity source 40 to the vehicle 10 is possible.

The external electricity source 40 includes an alternating-current electricity source 41 and an electricity source outlet 42. For the alternating-current electricity source 41, for example, an alternating-current system electricity source that is provided by an electricity provider may be used.

### Operation of Vehicle 10

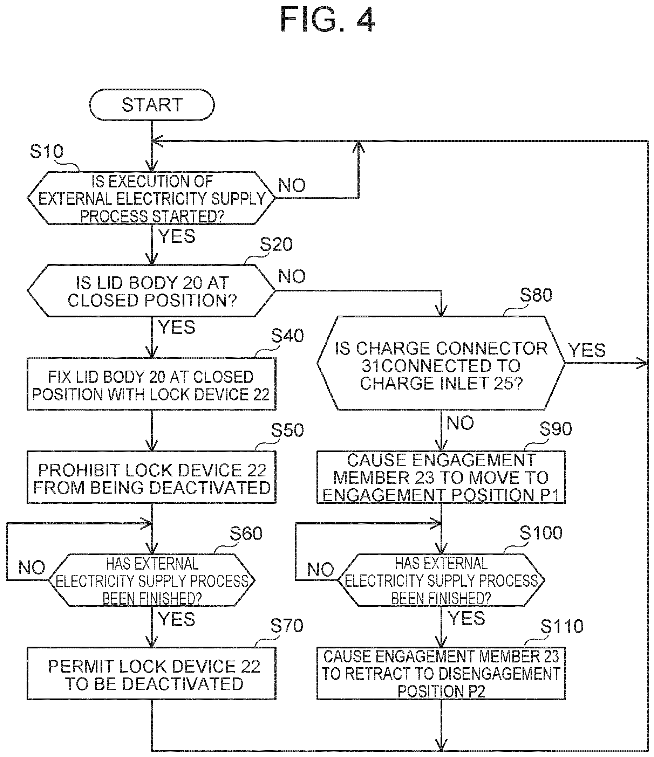

The operation of the vehicle 10 will be described with use of a flowchart in FIG. 4. The execution of a process of FIG. 4 is started, for example, when an ignition switch is turned on. In S10, the control unit 18 determines whether the execution of an external electricity supply process of supplying electric power from the electricity supply unit 19 to the external load 50 is started. This determination may be performed, for example, when an unillustrated external electricity supply switch is turned on. In the case where the negative determination is made (S10: NO), the control unit 18 waits, and in the case where the positive determination is made (S10: YES), the process proceeds to S20.

In S20, the control unit 18 determines whether the lid body 20 is at the closed position. The determination may be performed by an unillustrated sensor, or may be performed based on the state of the first motor 21. In the case where the positive determination is made (S20: YES), the process proceeds to S40.

In S40, the control unit 18 activates the lock device 22, to fix the lid body 20 at the closed position (see FIG. 2). Further, in S50, the control unit 18 prohibits the lock device 22 from being deactivated. That is, the state where the lock pin 22p engages with the lid body 20 cannot be canceled by user's operation. At this time, for example, information indicating that the lid body 20 cannot be unlocked may be displayed on a display (not illustrated) at a driver's seat.

In S60, the control unit 18 determines whether the external electricity supply process has been finished. This determination may be performed, for example, when the unillustrated external electricity supply switch is turned off. In the case where the negative determination is made (S60: NO), the control unit 18 waits, and in the case where the positive determination is made (S60: YES), the process proceeds to S70. In S70, the control unit 18 permits the lock device 22 to be deactivated. For example, information indicating that the lid body 20 can be unlocked may be displayed on the display (not illustrated) at the driver's seat. Then, the process returns to S10.

On the other hand, in the case where the lid body 20 is not at the closed position in S20 (S20: NO), it is determined that the external electricity supply process has been started in the state where the lid body 20 is at the open position, and the process proceeds to S80. In S80, the control unit 18 determines whether the charge connector 31 is connected to the charge inlet 25. The determination may be performed by detecting whether there is a signal that is sent from the charge cable 30 through an unillustrated signal line. In the case where the charge connector 31 is connected (S80: YES), the process returns to S10, and in the case where the charge connector 31 is not connected (S80: NO), the process proceeds to S90. In S90, the control unit 18 activates the second motor 24, to cause the engagement member 23 to move to the engagement position P1 (see FIG. 3).

In S100, the control unit 18 determines whether the external electricity supply process has been finished. In the case where the negative determination is made (S100: NO), the control unit 18 waits, and in the case where the positive determination is made (S100: YES), the process proceeds to S110. In S110, the control unit 18 activates the second motor 24, to cause the engagement member 23 to retract to the disengagement position P2 (see FIG. 3). Then, the process returns to S10.

### PROBLEM AND EFFECT

First, a problem will be described. The charge cable 30 has a function to diagnose whether any of various abnormities has occurred in the charge cable 30 when the charge connector 31 is connected to the charge inlet 25. As an example, the charge cable 30 diagnoses whether welding has occurred in the CCID relay 36. Specifically, at the time of the connection of the charge connector 31, the CCID control unit 35 detects the voltage between the voltage of the first terminal T1 and the ground voltage of the reference voltage site GND and the voltage between the voltage of the second terminal T2 and the ground voltage of the reference voltage site GND. Then, in the case where the detected voltage is exceeding a previously set threshold, it is determined that welding has occurred in the CCID relay 36. In this case, the CCID control unit 35 prohibits the charge with the charge cable 30.

Further, during the execution of the external electricity supply process of supplying electric power from the battery 17 to the external load 50 through the electricity supply unit 19, the high voltage VH, which is a direct-current voltage, is converted into a voltage of 100 V, which is a single-phase alternating-current voltage, by a switching operation of the electric power converter circuit 15. The vibration in voltage that is generated by the switching operation is transmitted to the reference voltage site GND. At the time of the transmission, voltage is generated at the high-level reference voltage site VH-GND. The high-level reference voltage site VH-GND is connected to the second terminal T2 of the charge inlet 25 through the voltmeter 13. Accordingly, during the execution of the external electricity supply process, voltage is generated at the second terminal T2.

On that occasion, in the case where the charge cable 30 is connected to the charge inlet 25 during the execution of the external electricity supply process, the voltage values of the first terminal T1 and the second terminal T2 are detected in the state where voltage has been generated at the second terminal T2. Consequently, the detection voltage can be exceeding the threshold, and a misdetection indicating that welding has occurred in the CCID relay 36 can be made. As a result, there is concern that the charge with the charge cable 30 cannot be performed. For solving this problem, it is possible that the alteration or addition of a charge circuit configuration is performed such that voltage is not generated at the second terminal T2 during the execution of the external electricity supply process. However, the alteration or addition of a charge circuit configuration causes increase in development cost or production cost, and therefore is not preferable.

Hence, in the technology in the present specification, when the external electricity supply process is started (S10: YES) in the state where the lid body 20 is at the closed position (S20: YES), the lock device 22 is activated and the lid body 20 is fixed at the closed position (S40). Further, while the external electricity supply process is continued, the lock device 22 is prohibited from being deactivated (S50). Thereby, during the external electricity supply process, it is possible to maintain the state where the charge inlet 25 is covered with the lid body 20. It is possible to prohibit the charge connector 31 from being connected to the charge inlet 25 during the external electricity supply process, and therefore it is possible to prevent the diagnosis about the abnormity of the charge cable 30 from being executed during the external electricity supply process. It is possible to prevent the misdetection indicating that welding has occurred in the CCID relay 36, without the alteration or addition of a charge circuit configuration.

Further, in the technology in the present specification, in the case where the charge connector 31 is not connected (S80: NO) when the external electricity supply process is started, it is possible to cause the engagement member 23 to automatically move to the engagement position P1 (S90, see FIG. 3). Even in the case where the lid body 20 is opened, it is possible to block the connection of the charge connector 31 to the charge inlet 25, with the engagement member 23 positioned at the engagement position P1. Thereby, during the external electricity supply process, it is possible to make the state where the charge connector 31 cannot be connected to the charge inlet 25. Consequently, it is possible to prevent the misdetection indicating that welding has occurred in the CCID relay 36.

### Second Embodiment

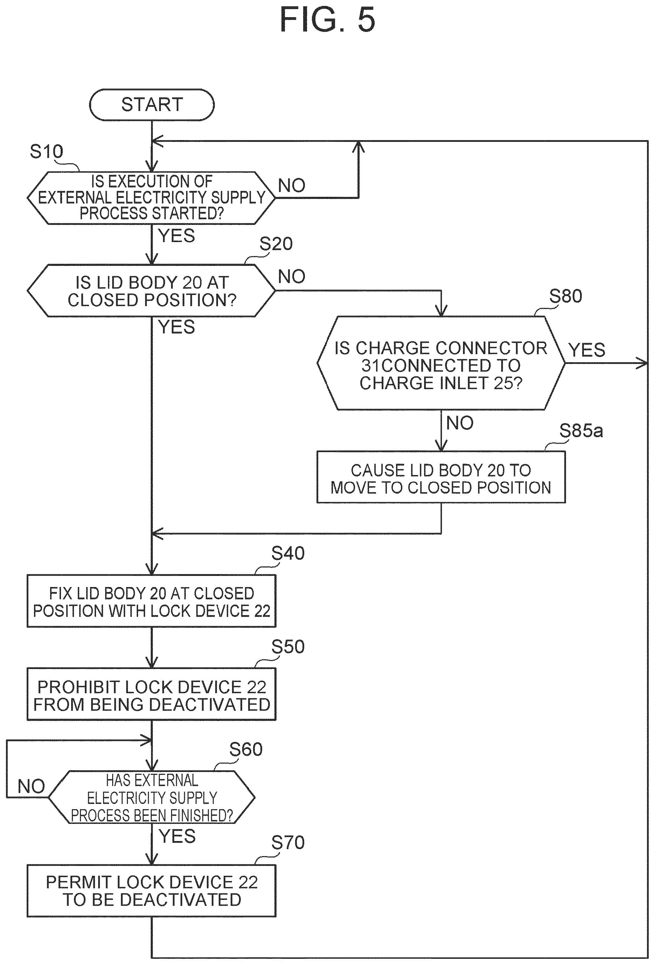

The operation of the vehicle 10 in a second embodiment will be described with use of a flowchart in FIG. 5. Common sites between the flow in the second embodiment (FIG. 5) and the flow in the first embodiment (FIG. 4) are denoted by identical reference characters, and descriptions are omitted. Further, a step specific to the embodiment is distinguished by putting "a" to the tail end of the reference character.

In the case where the lid body 20 is not at the closed position (S20: NO) and where the charge connector 31 is not connected to the charge inlet 25 (S80: NO), the process proceeds to S85a. In S85a, the control unit 18 activates the first motor 21, to cause the lid body 20 to move to the closed position. Thereafter, the process proceeds to S40, and the lock device 22 is activated, so that the lid body 20 is fixed at the closed position (see FIG. 2).

### Effect

In the technology in the second embodiment, it is possible to cause the lid body 20 to be automatically closed, in the case where the lid body 20 is at the open position (S20: NO) when the external electricity supply process is started. During the external electricity supply process, it is possible to surely make the state where the charge connector cannot be connected to the charge inlet.

Specific examples of the present invention have been described above in detail. They are just examples, the scope of the invention being defined in the claims. Further, the technology exemplified in the present specification or the drawings can achieve a plurality of objects at the same time, and has technical utility simply by achieving one object of the plurality of objects.

### Modification

The structures of the lid body 20, the lock device 22, and the engagement member 23 are not particularly limited, and various structures can be employed.

## Claims

1. A vehicle (10) comprising:
a battery (17);
an electricity supply unit (19) configured to be capable of supplying electric power from the battery to an external load (50);
a charge port unit (11) including a charge inlet that a charge connector (31) is attached to and detached from, the charge connector being used for charging the battery with an external electricity source (40); and
a control unit (18) configured to control operation of a movable portion (20,21,22,23,24), wherein
the charge port unit (11) includes the movable portion (20,21,22,23,24) and a first actuator, wherein
the movable portion (20,21,22,23,24) includes a lid body (20) configured to be capable of moving between a closed position and an open position, the closed position being a position where the charge inlet is covered, the open position being a position where the charge inlet is exposed, and
the first actuator is configured to cause the lid body (20) to move between the closed position and the open position, wherein
when an external electricity supply process of supplying electric power from the electricity supply unit (19) to the external load (50) is executed in a state where the lid body is at the open position, the control unit controls (18) first actuator to move the movable portion of the charge port unit to the closed position, to physically prohibit the charge connector from being connected to the charge inlet;
**characterized in that**
the movable portion (20,21,22,23,24) of the charge port unit (11) includes
an engagement member (23) configured to be capable of moving between an engagement position (P1) and a disengagement position (P2), the engagement position being a position where the engagement member engages with the charge connector (31), the disengagement position being a position where the engagement member disengages from the charge connector, and
a second actuator configured to cause the engagement member (23) to move between the engagement position and the disengagement position; and
when the external electricity supply process is started and the charge connector is not connected to the charge inlet, the control unit (18) activates the second actuator, to cause the engagement member to move to the engagement position.

2. The vehicle according to claim 1, wherein:
the movable portion of the charge port unit (11) includes
a lock device (22) configured to fix the lid body at the closed position; and
when the external electricity supply process is started in a state where the lid body is at the closed position, the control unit (18) activates the lock device (22), to fix the lid body at the closed position, and prohibits the lock device from being deactivated while the external electricity supply process is continued.

3. The vehicle according to claim 2, wherein:
the charge port unit (11) further includes a first actuator configured to cause the lid body (20) to move between the closed position and the open position; and
when the external electricity supply process is started in a state where the lid body is at the open position, the control unit (18) activates the first actuator, to cause the lid body to move to the closed position.

## Patentansprüche

1. Fahrzeug (10), umfassend:
eine Batterie (17);
eine Stromversorgungseinheit (19), die dazu konfiguriert ist, einer externen Last (50) elektrische Energie aus der Batterie zuführen zu können;
eine Ladeanschlusseinheit (11), die einen Ladeeinlass umfasst, an dem ein Ladestecker (31) angebracht und davon abgenommen wird, wobei der Ladestecker zum Laden der Batterie mit einer externen Stromquelle (40) verwendet wird; und
eine Steuereinheit (18), die dazu konfiguriert ist, den Betrieb eines bewegbaren Abschnitts (20, 21, 22, 23, 24) zu steuern, wobei
die Ladeanschlusseinheit (11) den bewegbaren Abschnitt (20, 21, 22, 23, 24) und ein erstes Stellglied umfasst, wobei
der bewegbare Abschnitt (20, 21, 22, 23, 24) einen Deckelkörper (20) umfasst, der dazu konfiguriert ist, sich zwischen einer geschlossenen Position und einer offenen Position bewegen zu können, wobei die geschlossene Position eine Position ist, in welcher der Ladeeinlass abgedeckt ist, wobei die offene Position eine Position ist, in welcher der Ladeeinlass freigelegt ist, und
das erste Stellglied dazu konfiguriert ist, zu bewirken, dass sich der Deckelkörper (20) zwischen der geschlossenen Position und der offenen Position bewegt, wobei
wenn ein externer Stromversorgungsprozess zum Zuführen von elektrischer Energie von der Stromversorgungseinheit (19) zu der externen Last (50) in einem Zustand ausgeführt wird, in dem sich der Deckelkörper in der offenen Position befindet, die Steuereinheit (18) das erste Stellglied steuert, damit es den bewegbaren Abschnitt der Ladeanschlusseinheit in die geschlossene Position bewegt, um räumlich zu verhindern, dass der Ladestecker an den Ladeeinlass angeschlossen wird;
**dadurch gekennzeichnet, dass**
der bewegbare Abschnitt (20, 21, 22, 23, 24) der Ladeanschlusseinheit (11) umfasst
ein Einrückelement (23), das dazu konfiguriert ist, sich zwischen einer Einrückposition (P1) und einer Ausrückposition (P2) bewegen zu können, wobei die Einrückposition eine Position ist, in der das Einrückelement in den Ladestecker (31) einrückt, wobei die Ausrückposition eine Position ist, in der das Einrückelement aus dem Ladestecker ausrückt, und
ein zweites Stellglied, das dazu konfiguriert ist, zu bewirken, dass sich das Einrückelement (23) zwischen der Einrückposition und der Ausrückposition bewegt; und
wenn der externe Stromversorgungsprozess gestartet wird und der Ladestecker nicht an den Ladeeinlass angeschlossen ist, die Steuereinheit (18) das zweite Stellglied aktiviert, damit es bewirkt, dass sich das Einrückelement in die Einrückposition bewegt.

2. Fahrzeug nach Anspruch 1, wobei:
der bewegbare Abschnitt der Ladeanschlusseinheit (11) umfasst
eine Verriegelungsvorrichtung (22), die dazu konfiguriert ist, den Deckelkörper in der geschlossenen Position zu fixieren; und
wenn der externe Stromversorgungsprozess in einem Zustand gestartet wird, in dem sich der Deckelkörper in der geschlossenen Position befindet, die Steuereinheit (18) die Verriegelungsvorrichtung (22) aktiviert, um den Deckelkörper in der geschlossenen Position zu fixieren, und verhindert, dass die Verriegelungsvorrichtung deaktiviert wird, während der externe Stromversorgungsprozess fortfährt.

3. Fahrzeug nach Anspruch 2, wobei:
die Ladeanschlusseinheit (11) ferner ein erstes Stellglied umfasst, das dazu konfiguriert ist, zu bewirken, dass sich der Deckelkörper (20) zwischen der geschlossenen Position und der offenen Position bewegt; und
wenn der externe Stromversorgungsprozess in einem Zustand gestartet wird, in dem sich der Deckelkörper in der offenen Position befindet, die Steuereinheit (18) das erste Stellglied aktiviert, um zu bewirken, dass sich der Deckelkörper in die geschlossene Position bewegt.

## Revendications

1. Véhicule (10) comprenant :
une batterie (17) ;
une unité d'alimentation en électricité (19) configurée pour pouvoir fournir de l'énergie électrique de la batterie à une charge externe (50) ;
une unité d'orifice de charge (11) comprenant une entrée de charge à laquelle un connecteur de charge (31) est fixé et détaché, le connecteur de charge étant utilisé pour charger la batterie avec une source d'électricité externe (40) ; et
une unité de commande (18) configurée pour commander le fonctionnement d'une partie mobile (20, 21, 22, 23, 24), dans lequel :
l'unité d'orifice de charge (11) comprend la partie mobile (20, 21, 22, 23, 24) et un premier actionneur, dans lequel :
la partie mobile (20, 21, 22, 23, 24) comprend un corps de couvercle (20) configuré pour pouvoir se déplacer entre une position fermée et une position ouverte, la position fermée étant une position dans laquelle l'entrée de charge est couverte, la position ouverte étant une position dans laquelle l'entrée de charge est exposée, et
le premier actionneur est configuré pour amener le corps de couvercle (20) à se déplacer entre la position fermée et la position ouverte, dans lequel :
lorsqu'un processus d'alimentation en électricité externe pour fournir l'énergie électrique de l'unité d'alimentation en électricité (19) à la charge externe (50) est exécuté dans un état dans lequel le corps de couvercle est dans la position ouverte, l'unité de commande (18) commande le premier actionneur pour déplacer la partie mobile de l'unité d'orifice de charge dans la position fermée, afin d'empêcher physiquement le connecteur de charge de se connecter à l'entrée de charge ;
**caractérisé en ce que** :
la partie mobile (20, 21, 22, 23, 24) de l'unité d'orifice de charge (11) comprend :
un élément de mise en prise (23) configuré pour pouvoir se déplacer entre une position de mise en prise (P1) et une position de dégagement (P2), la position de mise en prise étant une position dans laquelle l'élément de mise en prise se met en prise avec le connecteur de charge (31), la position de dégagement étant une position dans laquelle l'élément de mise en prise se dégage du connecteur de charge ; et
un deuxième actionneur configuré pour amener l'élément de mise en prise (23) à se déplacer entre la position de mise en prise et la position de dégagement ; et
lorsque le processus d'alimentation en électricité externe est démarré et que le connecteur de charge n'est pas raccordé à l'entrée de charge, l'unité de commande (18) active le deuxième actionneur, pour amener l'élément de mise en prise à se déplacer dans la position de mise en prise.

2. Véhicule selon la revendication 1, dans lequel :
la partie mobile de l'unité d'orifice de charge (11) comprend :
un dispositif de verrouillage (22) configuré pour fixer le corps de couvercle dans la position fermée ; et
lorsque le processus d'alimentation en électricité externe est démarré dans un état dans lequel le corps de couvercle est dans la position fermée, l'unité de commande (18) active le dispositif de verrouillage (22), pour fixer le corps de couvercle dans la position fermée, et empêche le dispositif de verrouillage d'être désactivé alors que le processus d'alimentation en électricité externe continue.

3. Véhicule selon la revendication 2, dans lequel :
l'unité d'orifice de charge (11) comprend en outre un premier actionneur configuré pour amener le corps de couvercle (20) à se déplacer entre la position fermée et la position ouverte ; et
lorsque le processus d'alimentation en électricité externe est démarré dans un état dans lequel le corps de couvercle est dans la position ouverte, l'unité de commande (18) active le premier actionneur, pour amener le corps de couvercle à se déplacer dans la position fermée.
